Europäisches Patentamt

European Patent Office

Office européen des brevets

(19)

(11) Veröffentlichungsnummer: **0 181 834 B1**

(12) **EUROPÄISCHE PATENTSCHRIFT**

(45) Veröffentlichungstag der Patentschrift: **18.12.91**

(51) Int. Cl.⁵: **G01C 17/04**

(21) Anmeldenummer: **85810490.4**

(22) Anmeldetag: **28.10.85**

(54) **Magnetkompass-Körper.**

(30) Priorität: **29.10.84 EP 84810518**

(43) Veröffentlichungstag der Anmeldung:
**21.05.86 Patentblatt 86/21**

(45) Bekanntmachung des Hinweises auf die
Patenterteilung:
**18.12.91 Patentblatt 91/51**

(84) Benannte Vertragsstaaten:
**AT CH DE FR GB IT LI SE**

(56) Entgegenhaltungen:
**DE-C- 725 710**
**GB-A- 2 025 616**
**US-A- 4 236 316**

**Lexikon "ABC Naturwissenschaft u. Technik", Stichwort KOMPASS**

(73) Patentinhaber: **Stolz, Patrick**
**Route de Boujean 60**
**CH-2502 Bienne(CH)**

(72) Erfinder: **Stolz, Patrick**
**Route de Boujean 60**
**CH-2502 Bienne(CH)**

(74) Vertreter: **Seehof, Michel et al**
**c/o AMMANN PATENTANWAELTE AG BERN**
**Schwarztorstrasse 31**
**CH-3001 Bern(CH)**

**Beschreibung**

Die vorliegende Erfindung bezieht sich auf einen Magnetkompass-Körper mit einer drehbeweglichen Lagerung, an der eine Zeigeranordnung angebracht ist, wobei die Magnetsubstanz in der Lagerung angeordnet ist und die Lagerung auf einem im Boden des Magnetkompass-Körpers eingelassenen Lagerstift aufgehängt ist und mindestens um eine zur Längsrichtung des Lagerstiftes senkrechte Kippachse drehbar ist, um die Inklination automatisch auszugleichen.

Ein solcher Magnetkompass ist aus der GB-A-2 025 616 bekannt, wobei es dort vor allem darum geht, eine Verbesserung der Wirbelstromdämpfung zu erzielen. Diese Dämpfungsart bedingt jedoch eine Schale aus elektrisch gut leitendem Material sowie eine speziell angepasste Halterung, um die Zeigeranordnung ausserhalb der Schale zu tragen. Dadurch werden die Gestaltungsmöglichkeiten stark eingeengt, die Kosten verhältnismässig hoch und vor allem lässt die Aufhängung keine grosse Präzision zu.

Es ist davon ausgehend Aufgabe der vorliegenden Erfindung, einen Magnetkompass-Körper anzugeben, der eine hochpräzise Aufhängung und eine sehr gute Ablesemöglichkeit aufweist.

Diese Aufgabe wird bei einem Magnetkompass-Körper der eingangs genannten Art durch die kennzeichnenden Merkmale des Anspruchs 1 gelöst.

Die Erfindung wird im folgenden anhand von Ausführungsbeispielen näher erläutert.

Fig. 1    zeigt, teilweise im Schnitt, ein erstes Ausführungsbeispiel eines Magnetkompass-Körpers,

Fig. 2    zeigt den Kompasskörper gemäss Fig. 1 von oben,

Fig. 3    zeigt, im vergrösserten Massstab, einen Schnitt durch die Lagerung des Kompasskörpers nach Fig. 1,

Fig. 4    zeigt das innere Gehäusestück des Kompasskörpers gemäss Fig. 3 von oben, teilweise geschnitten,

Fig. 5    zeigt eine Ausführungsvariante des Gehäusestücks gemäss Fig. 4.

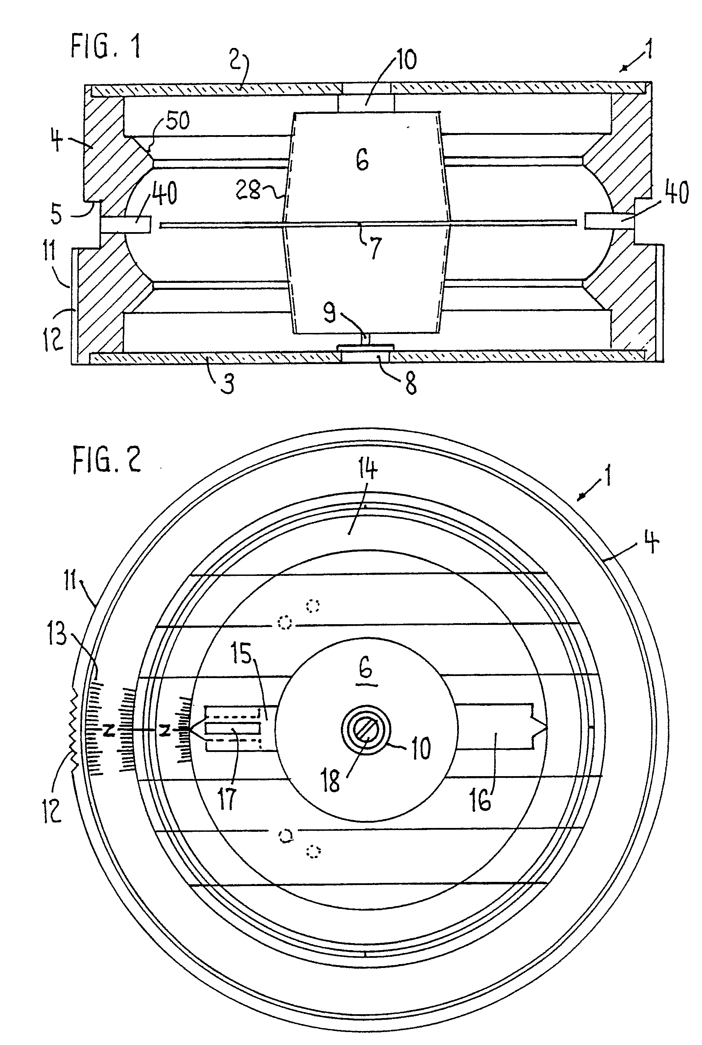

Man erkennt in Fig. 1 den als Einheit zusammengebauten Magnetkompasskörper 1, mit einem oberen und unteren Deckglas 2 und 3, der Seitenwand 4 und der drehbeweglichen Lagerung 6 mit der Zeigeranordnung 7. Man erkennt ferner die Halterung 8 des Lagerstiftes 9 und oben den Stellknopf 10 zum Einstellen der Deklination. Der untere Teil 11 der Seitenwand weist einen grösseren Durchmesser und eine Riffelung 12 auf, um den Kompasskörper gegenüber dem nicht eingezeichneten Kompassgehäuse bequem verdrehen zu können, wobei der Kompasskörper mittels der Nut 5 am Kompassgehäuse geführt ist. Die Seitenwand 4 weist in Fig. 1 zwei unter 45° geneigte, verspiegelte Flächen 50 auf, mit denen es möglich ist, Zeichen oder Skalateile, die auf der Oberfläche der Kappe 28 der Lagerung 6 angebracht sind, auf die Deckgläser 2 und 3 zu projizieren. Dadurch kann unter anderem die Deklination genau eingestellt werden.

Um ein genaues Ablesen der Kompasszeiger auch bei schwachem Licht zu ermöglichen ist es vorteilhaft, in die Seitenwand 4 des Kompasskörpers einen Ring oder einzelne Elemente 40 anzubringen, die mit einem Leuchtgas wie Tritium gefüllt sein können.

In Fig. 2 erkennt man, von aussen nach innen, die feste Skala 13, die an der Zeigeranordnung 7 angebrachte bewegliche Skala 14, die ringförmig ausgebildet und die beiden Zeiger 15 und 16, die an der drehbeweglichen Lagerung 6 befestigt sind, wobei der nach Norden weisende Zeiger 15 üblicherweise mit einer Leuchtfarbe 17 gekennzeichnet ist. Innen erkennt man wieder die Lagerung 6 mit dem Einstellknopf 10, der eine Stellschraube 18 aufweist, wobei die Einstellvorrichtung weiter unten erläutert wird. Ausserdem sind noch einige Skalateile, wie sie bei Magnetkompassen üblich sind, eingezeichnet.

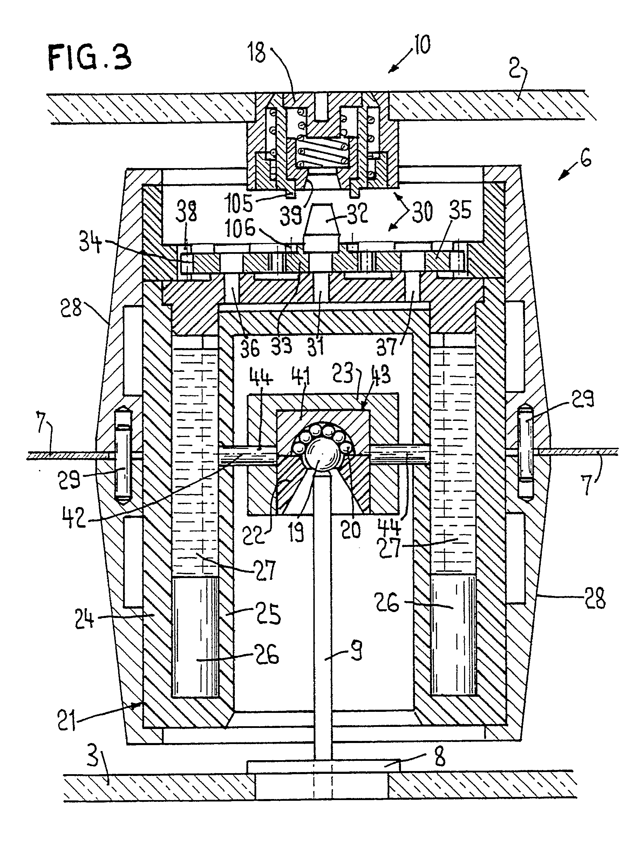

In Fig. 3 ist ein erstes Ausführungsbeispiel einer Lagerung für eine Anzeigevorrichtung eines Magnetkompasses im vergrösserten Massstab dargestellt. Die Lagerung 6, als zylinderförmiger Körper mit sich von der Mitte her verjüngenden Aussenseiten ist auf dem Lagerstift 9 aufgehängt, der an seinem oberen Ende eine Kugel 19, im allgemeinen aus Saphir oder Rubin oder gehärtetem, nicht magnetischem Stahl aufweist. Das Gegenlager wird aus einem Kugellager 20 gebildet, das halb kugelförmig um die Lagerkugel 19 angeordnet ist. Der halbkugelförmig ausgebildete Kugellagerkäfig 41 ist in einem inneren Gehäusestück 21 eingesetzt und von einem Verschlussteil 22 gehalten. Im Zentrum des inneren Gehäusestücks ist der Magnet 23 eingelassen, wobei es möglich ist, mit den zu Verfügung stehenden stark magnetischen Materialien wie beispielsweise Samarium-Kobalt oder andere Seltenerden-Kobalt-Legierungen oder metallischen Gläsern eine relativ kleine Magnetmasse zu verwenden.

Der Kugellagerkäfig 41 und das Verschlussteil 22 bilden ein Lagerteil 43, das für sich angefertigt und in die Magnetmasse 23 eingesteckt werden kann. Beidseitig des Lagerteils 43 und durch die Magnetmasse 23 geführt, sind Drehzapfen 44 angeordnet, die eine Kippachse 42 bilden, die senkrecht zur Längsrichtung des Lagerstiftes und durch den Mittelpunkt der Lagerspitze 19 verläuft. Die Kippachse verläuft bezüglich der Zeigeranordnung genau in Ost-West-Richtung, so dass die Inklination unabhängig von deren Wert stets automatisch ausgeglichen wird und eine genaue Ablesung sowie ein einwandfreies Einstellen der Zeigeranordnung gewährleistet ist, auch in Ländern, die nahe dem Süd- oder Nordpol gelegen sind.

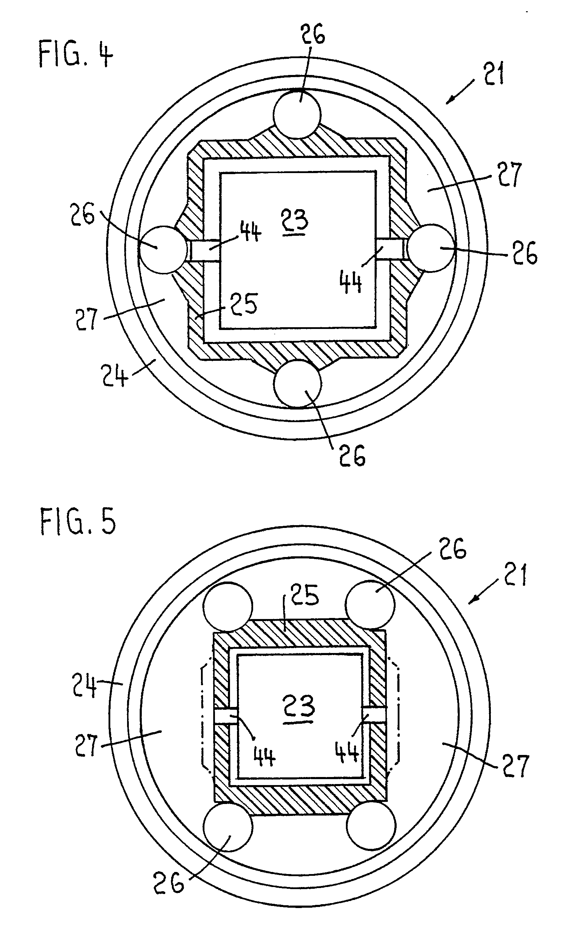

Das innere Gehäusestücks 21 ist im Querschnitt U-förmig ausgebildet, wobei die Aussenwand 23 nicht wie eingezeichnet zylindrisch zu sein braucht, sondern vier- oder mehreckig ausgebildet sein kann, während die Innenwand 24 in diesem Ausführungsbeispiel viereckig ist. Die beiden Wände 24 und 25 bilden eine Dämpfungskammer 27, in welcher, unterhalb des Aufhängungspunktes, mehrere Gewichtsausgleichszylinder 26 angeordnet sind, die zum genauesten Ausgleichen und Auswuchten der Lagerung auf dem Lagerstift dienen. Diese Ausgleichzylinder können gemäss Fig. 4 jeweils an der Seitenmitte oder gemäss Fig. 5 an den Ecken angeordnet sein. Die Dämpfungskammer 27 kann mit einer Flüssigkeit oder Quecksilber gefüllt sein und ist vollkommen dampf- und gasdicht geschlossen, so dass keinerlei Dämpfe oder Gase entweichen können. Durch den Einbau einer geschlossenen Dämpfungskammer, die auch unterteilt sein kann, kann eine rasche und gute Dämpfung der Lagerung und mithin der Zeigeranordnung erreicht werden. Um das innere Gehäusestück 21 herum befindet sich die Kappe 28, vorzugsweise aus Kunststoff, mit sich verjüngenden Aussenseiten, wobei in dieser Kappe die Zeigeranordnung 7 eingelassen und über Stifte 29 gesichert ist.

Im oberen Teil des Halters befindet sich eine Feststell- und Verstelleinrichtung 30, die mit dem Einstellknopf 10 zusammenarbeitet. Man erkennt eine zentrale Achse 31, die oben mit einem Konus 32 und in der Mitte mit einem Zahnrad 33 versehen ist, das mit zwei Zahnrädern 34 und 35 kämmt, die um je eine Achse 36 und 37 drehen. Die beiden äusseren Zahnräder kämmen mit einem im oberen Teil der Kappe eingelassenen Zahnkranz 38. Durch Niederdrücken des Einstellknopfes 10 fasst die konische Oeffnung 39 den Konus 32 und stellt die Lagerung 6 fest und die Zapfen 105 greifen in entsprechende Oeffnungen 106 im Zahnrad 33. Durch Drehen der Schraube 18 werden die Zahnräder und anschliessend der Zahnkranz 38 in Drehung versetzt, d.h. die ganze Lagerung 6 mit der beweglichen Skala. Eine solche Einstelleinrichtung erlaubt es, eine entsprechende Skala für die wichtigsten Orte der Erde anzubringen und die absolute Nordrichtung sowie die Deklination sehr genau einzustellen.

Als Variante zu der Aufhängung des Kompasskörpers kann der U-förmige Teil des inneren Körperstücks gänzlich mit einer Bremsflüssigkeit gefüllt sein, beispielsweise Oel oder Quecksilber, wobei diese Flüssigkeit auch unter einem bestimmten Gasdruck stehen kann und dieses Gas ein leuchtendes Gas wie Tritium sein kann. Es ist auch möglich, den Magneten direkt als Halter für den Kugellagerkäfig auszubilden, wodurch Höhe und Gewicht gespart werden kann.

Anstatt der in Fig. 1 gezeigten, unter 45° geneigten und verspiegelten Flächen ist es auch möglich, die verspiegelten Flächen parabolisch oder sonstwie gestaltet anzufertigen und anstatt des unteren Deckglases 3 auch den Boden als spiegelnde Fläche zu verwenden. Insbesondere bei solchen Fällen kann die Kappe der Lagerung aussen kugelförmig oder auch halbkugelförmig ausgebildet sein.

**Patentansprüche**

1. Magnetkompass-Körper, mit einer drehbeweglichen Lagerung (6), an der eine Zeigeranordnung (7) angebracht ist, wobei die Magnetsubstanz (23) in der Lagerung angeordnet ist und die Lagerung (6) an einem im Boden des Magnetkompass-Körpers (1) eingelassenen Lagerstift (9) aufgehängt und mindestens um eine zur Längsrichtung des Lagerstiftes senkrechte Kippachse (42) drehbar ist, um die Inklination automatisch auszugleichen, dadurch gekennzeichnet, daß der Lagerstift (9) an seinem oberen Ende eine Kugel (19) aufweist, und das Gegenlager aus einem Kugellager (20) gebildet ist, das halbkugelförmig um die Lagerkugel (19) angeordnet ist.

2. Magnetkompass-Körper nach Anspruch 1, dadurch gekennzeichnet, dass die Lagerung (6) ein das Kugellager (20) umfassendes Lagerteil (43) aufweist, das in die im Zentrum des Magnetkompass-Körpers (1) angeordnete Magnetsubstanz (23) einsteckbar ist und an dem beidseitig die Kippachse (42) bildende Drehzapfen (44) angeordnet sind, derart, dass die Kippachse (42) durch den Mittelpunkt der Spitze des Lagerstiftes (9) verläuft.

3. Magnetkompass-Körper nach Anspruch 1 oder 2, dadurch gekennzeichnet, dass die Lagerung (6) aus einem inneren Gehäusestück (21) und einer Kappe (28) gebildet ist und das innere Gehäusestück im Querschnitt parallel zur Drehachse U-förmig ausgebildet ist und die beiden Seitenwände (24, 25) des U-förmigen Teils eine mit Quecksilber oder mit einer Flüssigkeit gefüllte Dämpfungskammer (27) bildet, in welcher Gewichtsausgleichzylinder (26) angeordnet sind.

4. Magnetkompass-Körper nach Anspruch 3, dadurch gekennzeichnet, dass die Innenwand (25) des inneren Gehäusestücks (21) im Querschnitt senkrecht zur Drehachse rechteckig ausgebildet ist und die Gewichtsausgleichzylinder (26) an der Mitte der Seiten oder an den Ecken des durch die Innenwand (25) gebildeten Rechtecks angeordnet sind.

5. Magnetkompass-Körper nach einem der Ansprüche 1 bis 4, dadurch gekennzeichnet, dass er Mittel (50) aufweist, um auf den Seiten (28) der Lagerung (6) sich befindliche Skalenteile und/oder Zeichen auf ein oberes Deckglas (2) zu projizieren.

6. Magnetkompass-Körper nach einem der Ansprüche 1 bis 5, dadurch gekennzeichnet, dass die Zeigeranordnung (7) mit zwei Zeigern (15, 16) und einer beweglichen Skala (14) in der Kappe (28) eingelassen ist und vorzugsweise aus Kunststoff gefertigt ist.

7. Magnetkompass-Körper nach einem der Ansprüche 1 bis 6, dadurch gekennzeichnet, dass er zwei Deckgläser (2, 3) und eine Seitenwand (4) aufweist, wobei die Lagerstifthalterung (8) im unteren Deckglas (3) eingelassen ist und in der Seitenwand ein Leuchtring oder Leuchtelemente (40) angeordnet sind.

8. Magnetkompass-Körper nach einem der Ansprüche 1 bis 7, dadurch gekennzeichnet, dass die Projektionsmittel aus mindestens einer unter 45° bezüglich der Drehachse geneigten, verspiegelten Fläche (50) bestehen, die an der Innenseite der Seitenwand (4) des Magnetkompass-Körpers (1) angeordnet sind und dass die Kappe (28) von der Mitte aus sich nach oben und unten verjüngende Seiten aufweist.

9. Magnetkompass-Körper nach einem der Ansprüche 1 bis 6, dadurch gekennzeichnet, dass die Projektionsmittel aus einer parabelförmigen den Boden (3) miteinbeziehenden, verspiegelten Fläche bestehen und die Kappe der Lagerung halbkugel- oder kugelförmig ist.

10. Magnetkompass-Körper nach einem der Ansprüche 1 bis 9, dadurch gekennzeichnet, dass er einen im oberen Deckglas (2) eingelassenen, auf die Lagerung (6) wirkenden Deklinations-Einstellknopf (10) aufweist, der mit einer Feststell- und Verstelleinrichtung (30) zusammenarbeitet, wobei eine mit einem zentralen Zahnrad (33) und oben mit einem Konus (32) versehene zentrale Achse (31) vom federbetätigten Einstellknopf (10) gehalten und gedreht werden kann und das zentrale Zahnrad über Zahnräder (34, 35) und einem Zahnkranz (38) an der Lagerung (6) mit dieser im Eingriff steht, um die absolute Nordrichtung und die Deklination einzustellen.

11. Magnetkompass-Körper nach einem der Ansprüche 1 bis 10, dadurch gekennzeichnet, dass der Körper (1,) mit Oel oder Gas gefüllt ist.

12. Magnetkompass-Körper nach einem der Ansprüche 1 bis 11, dadurch gekennzeichnet, dass die Magnetsubstanz (23) eine Seltenerden-Kobalt-, insbesondere eine Samarium-Kobalt-Legierung, oder ein metallisches Glas ist.

**Claims**

1. A magnet compass body, comprising a rotational bearing (6) to which a pointer assembly (7) is attached, the magnetic substance (23) being arranged in said bearing, and the bearing (6) being supported on a bearing pin (9) which is inserted in the base of the magnet compass body (1) and being rotatable around at least one pivot axis (42) which is perpendicular to the longitudinal direction of the bearing pin, in order to automatically compensate the inclination, characterized in that the bearing pin (9) is provided at its upper end with a ball (19), and the counterpart is formed of a ball-bearing (20) which is disposed around the bearing ball (19) in a semispherical arrangement.

2. A magnet compass body according to claim 1, characterized in that the bearing (6) is provided with a bearing portion (43) comprising the ball-bearing (20) which is insertable in the magnetic substance (23) disposed in the centre of the magnetic compass body (1), and on both sides of which pivots (44) forming the pivot axis (42) are attached in such a manner that the pivot axis (42) extends through the center of the tip of the bearing pin (9).

3. A magnet compass body according to claim 1 or 2, characterized in that the bearing (6) is formed of an inner housing piece (21) and a cap (28), that with reference to a cross-section in parallel to the pivot axis the inner housing piece has an U-shaped configuration, and that the two side walls (24,25) of the U-shaped piece form a damping chamber (27) which is filled with mercury or with a liquid and in which weight compensation cylinders (26) are disposed.

4. A magnet compass body according to claim 3, characterized in that with respect to a cross-section perpendicular to the pivot axis the inner wall (25) of the inner housing piece (21) has a rectangular configuration, and that the weight compensation cylinders (26) are disposed in the middle of the sides or at the corners of the rectangle formed by the inner wall (25).

5. A magnet compass body according to any one of claims 1 to 4, characterized in that it is provided with means (50) in order to project scale portions and/or symbols both of which are located on the sides (28) of the bearing (6) onto an upper cover glass (2).

6. A magnet compass body according to any one of claims 1 to 5, characterized in that the pointer assembly (7), comprising two needles (15,16) and a movable scale (14), is inserted in the cap (28) and preferably made of plastics material.

7. A magnet compass body according to any one of claims 1 to 6, characterized in that it comprises two cover glasses (2,3) and a side wall (4), the bearing pin support (8) being inserted in the lower cover glass (3), and a luminous ring or luminous elements (40) being disposed in the side wall.

8. A magnet compass body according to any one of claims 1 to 7, characterized in that the projecting means which are arranged on the inner side of the side wall (4) of the magnet compass body (1) consist of at least one reflecting surface (50) which is inclined by 45° with respect to the pivot axis, and that the cap (28) is provided with sides which taper upwardly and downwardly from the centre.

9. A magnet compass body according to any one of claims 1 to 6, characterized in that the projecting means consist of a parabolic, reflecting surface which is integral with the base (3), and that the cap of the bearing is semispherical or spherical.

10. A magnet compass body according to any one of claims 1 to 9, characterized in that it comprises a declination adjustment knob which is sunk in the upper cover glass (2) and acts upon the bearing (6), and which cooperates with a locking and adjusting device (30), a central axle (31) provided with a central gearwheel (33), having a cone (32) at the top and being capable of being held and rotated by means of the spring-actuated adjusting knob (10), and the central gearwheel engaging with the bearing (6) by way of gearwheels (34, 35) and a toothed crown (38) which is provided on the bearing (6), in order to adjust the absolute north and the declination.

11. A magnet compass body according to any one of claims 1 to 10, characterized in that the body (1) is filled with oil or gas.

12. A magnet compass body according to any one of claims 1 to 11, characterized in that the magnetic substance (23) is a rare earth metal-cobalt-alloy, in particular a samarium-cobalt alloy, or a metallic glass.

**Revendications**

1. Corps de boussole magnétique, comprenant un support rotatif (6) auquel est attaché un dispositif indicateur (7), la substance magnétique (23) étant disposée dans le support, et le support (6) étant suspendu à une tige de support (9) sertie dans la base du corps de boussole magnétique (1) et étant pivotable autour d'au moins un axe de pivotement (42) perpendiculaire à la direction longitudinale de la tige de support afin de compenser automatiquement l'inclinaison, caractérisé en ce que la tige de support (9) présente à son extrémité supérieure une boule (19), et que sa contrepartie est formée d'un roulement à billes (20) qui est disposé de manière hémisphérique autour de la boule de support (19).

2. Corps de boussole magnétique selon la revendication 1, caractérise en ce que le support (6) présente une pièce palier (43) incluant le roulement à billes qui est enfichable dans la substance magnétique (23) disposée dans le centre du corps de boussole magnétique (1), et à laquelle sont agencés des deux côtés des pivots (44) formant l'axe de pivotement, de telle façon que l'axe de pivotement (42) passe par le centre de la pointe de la tige de support (9).

3. Corps de boussole selon la revendication 1 ou 2, caractérisé en ce que le support (6) est formé d'un logement intérieur (21) et d'un chapeau (28), et que le logement intérieur, en coupe transversale parallèlement à l'axe de pivotement, est conformé en U, et que le deux parois latérales (24,25) de la pièce en U forment une chambre d'amortissement (27) remplie de mercure ou d'un liquide, dans laquelle sont disposés des cylindres d'équilibrage de poids (26).

4. Corps de boussole magnétique selon la revendication 3, caractérise en ce que la paroi intérieure (25) du logement intérieur (21), en coupe transversale perpendiculairement à l'axe de pivotement, présente une configuration rectangulaire, et que les cylindres d'équilibrage de poids (26) sont disposés au centre ou aux coins du rectangle formé par la paroi intérieure (25).

5. Corps de boussole magnétique selon l'une des revendications 1 à 4, caractérisé en ce qu'il présente des moyens (50) pour projeter sur une lunette (2) supérieure des parties de graduations qui se trouvent sur les côtés (28) du support (6).

6. Corps de boussole magnétique selon l'une des revendications 1 à 5, caractérisé en ce que le dispositif indicateur (7), comprenant deux aiguilles (15,16) et une graduation mobile (14), est serti dans le chapeau (28) et préférablement fabriqué en matière synthétique.

7. Corps de boussole magnétique selon l'une des revendications 1 à 6, caractérisé en ce qu'il comporte deux lunettes (2,3) et une paroi latérale (4), la retenue (8) de la tige de support étant sertie dans la lunette inférieure (3), et un anneau lumineux ou des éléments lumineux (40) étant disposés dans la paroi latérale.

8. Corps de boussole magnétique selon l'une des revendications 1 à 7, caractérisé en ce que lesdits moyens de projection sont constitués par au moins une surface (50) réfléchissante inclinée de 45° qui est disposée sur le côté intérieur de la paroi latérale (4) du corps de boussole magnétique (1), et que le chapeau (28) présente des côtés qui se rétrécissent à partir du centre vers le haut et vers le bas.

9. Corps de boussole magnétique selon l'une des revendications 1 à 6, caractérisé en ce que les moyens de projection sont constitués par une surface réfléchissante parabolique intégrale avec la base (3), et que le chapeau du support est hémisphérique ou sphérique.

10. Corps de boussole magnétique selon l'une des revendications 1 à 9, caractérisé en ce qu'il présente un bouton d'ajustage (10) de la déclinaison inséré dans la lunette supérieure (2) et agissant sur le support (6), qui coopère avec un dispositif de fixage et d'ajustage (30), un arbre central (31) qui comporte une roue dentée centrale (33) et au sommet un cône étant capable d'être tenu et tourne au moyen dudit bouton d'ajustage (10) actionné par ressort, et la roue dentée étant en engagement avec un couronne dentée (38) du support (6) par l'intermédiaire de roues dentées (34,35) afin d'ajuster le nord absolu et la déclinaison.

11. Corps de boussole magnétique selon l'une des revendications 1 à 10, caractérisé en ce que ledit corps (1) est rempli d'huile ou de gaz.

12. Corps de boussole magnétique selon l'une des revendications 1 à 11, caractérisé en ce que la substance magnétique (23) est un alliage de terres rares-cobalt, en particulier de samarium-cobalt, ou un verre métallique.

FIG. 1

FIG. 2

# FIG.3

FIG. 4

FIG. 5